# FASCICULE DE BREVET EUROPEEN

(11) **EP 2 941 161 B1**
(45) Date de publication et mention de la délivrance du brevet: **19.04.2017**
(21) Numéro de dépôt: 13827017.8
(22) Date de dépôt: 19.12.2013
(51) Int. Cl.: A47J 43/07, A47J 43/25

(54) **APPAREIL DE PRÉPARATION CULINAIRE AVEC SUPPORT DE RANGEMENT D'ACCESSOIRES DE TRAVAIL AMOVIBLES**
LEBENSMITTELZUBEREITUNGSVORRICHTUNG MIT EINER HALTERUNG ZUR ANBRINGUNG EINES ABNEHMBAREN REINIGUNGSZUBEHÖRS
FOOD-PREPARATION APPLIANCE HAVING A MOUNTING FOR STORING REMOVABLE WORK ACCESSORIES

(30) Priorité: 21.12.2012 FR 1262563
(43) Date de publication de la demande: 11.11.2015
(73) Titulaire: SEB S.A., 69130 Ecully (FR)
(72) Inventeur: VOLATIER, Sébastien, 21000 Dijon (FR); CYPRES, Régis, 65100 Lourdes (FR)
(74) Mandataire: Cémeli, Eric Philippe Laurent
(86) Numéro de dépôt international: PCT/FR2013/053182
(87) Numéro de publication internationale: WO 2014/096712

(56) Documents cités:
- EP-A1- 2 130 471
- WO-A1-2012/045961
- WO-A2-2007/103466

## Description

La présente invention concerne le domaine technique des appareils de préparation culinaire comportant au moins un accessoire de travail utilisé pour découper, trancher, râper ou émincer des aliments.

La présente invention concerne notamment, mais non exclusivement, les appareils ménagers de découpe, manuels ou motorisés, également appelés mandolines, utilisés pour découper des aliments, notamment en tranches ou en filaments, par un mouvement alternatif d'un outil de coupe.

Une demande CN101229020 a proposé un appareil ménager de découpe linéaire comprenant un châssis délimitant une chambre de travail qui intègre une zone de coupe qui est fixe par rapport au châssis. L'appareil comprend aussi une goulotte d'introduction d'aliments à découper qui est portée par un couvercle amovible rapporté sur le châssis et située au dessus de la zone de coupe en étant fixe par rapport à la zone de coupe et qui s'étend selon une direction Δ. Le couvercle amovible ferme alors le dessus de la chambre de travail. Enfin, l'appareil est pourvu d'un outil de coupe mobile par rapport au châssis dans la zone de coupe. L'outil de coupe mobile est déplacé par des moyens de manoeuvre motorisés selon un mouvement alternatif dans un plan de coupe sensiblement normal à la direction d'extension de la goulotte. Les moyens de manoeuvre comprennent une roue à excentrique entrainée en rotation par le moteur électrique. Un doigt excentré de cette roue se déplace dans une fenêtre solidaire d'un chariot lié à un organe d'accouplement avec l'outil de coupe de sorte que la rotation de la roue est transformée en une translation de l'organe d'accouplement. Les moyens de manoeuvre sont entrainés par un moteur électrique piloté par un interrupteur porté par le châssis. L'appareil comprend plusieurs outils de coupe interchangeables permettant de réaliser différentes tailles de tranches ou de filaments.

Lorsqu'un tel appareil n'est pas utilisé, le rangement des outils de coupe n'est pas toujours aisé et pose souvent un problème dans la mesure où les arrêtes tranchantes des outils de coupe peuvent être des causes de blessures.

Un appareil selon le préambule de la revendication 1 est connu du document EP2130471.

Il est donc apparu le besoin d'un appareil de préparation culinaire ou ménager qui apporte une solution à cette problématique de rangement des outils et/ou des accessoires susceptibles de l'équiper.

Afin d'atteindre cet objectif l'invention concerne un appareil de préparation culinaire comprenant :
- un châssis qui comprend, d'une part, un tronc destiné à être posé sur une surface de travail et, d'autre part, une tête de travail s'étendant à partir du tronc pour comprendre une région décalée par rapport au tronc et surplombant la surface de travail en étant située à distance de la surface de travail,
- au moins un accessoire de travail destiné à être adapté de manière amovible sur le châssis.

L'appareil de préparation culinaire comprend un support amovible de rangement du ou d'au moins un des accessoires de travail, le support étant porté par le châssis, et le support étant agencé principalement en dessous de la tête de travail au niveau de ladite région. Ainsi, le support offre une solution simple de rangement du ou des accessoires de travail. De plus, la position du support sous la région en surplomb de la tête de travail permet d'optimiser l'encombrement de l'ensemble en dehors des phases d'utilisation de l'appareil, et notamment lorsque l'ensemble est placé à l'intérieur d'un placard ou reste à demeure sur un plan de travail.

Au sens de l'invention un appareil de préparation culinaire est un appareil ménager adapté pour effectuer au moins une opération de préparation d'un aliment en vue de sa consommation ultérieure. Parmi les opérations susceptibles d'être réalisées au moyen d'un appareil selon l'invention, il est possible de citer la découpe en tranches, la découpe en filaments de différentes tailles ou râpage, la découpe en bâtonnets ou en cubes, sans que cette liste ne soit limitative ou exhaustive.

Selon une forme de réalisation, le support est agencé en dessous d'une ouverture de chute des aliments découpés agencée en dessous de la tête de travail.

Selon une caractéristique de l'invention, l'appareil comprend des moyens de suspension pour suspendre le support au moins en partie sous la tête de travail.

Selon un premier mode de réalisation, les moyens de suspension comprennent des moyens d'attache magnétique dont une partie est portée par la tête de travail et une autre partie par le support. La mise en oeuvre de tels moyens d'attache magnétique permet d'assurer facilement la fixation du support sans créer au niveau de la tête de travail des cavités susceptibles de s'encrasser lors de l'utilisation de l'appareil.

Selon un deuxième mode de réalisation de l'invention, les moyens de suspension sont adaptés pour maintenir le support par appui mécanique.

Selon une variante de ce deuxième mode de réalisation, les moyens de suspension comprennent au moins deux pattes latérales adaptées pour emboîter deux côtés opposés de la tête de travail.

Dans le cadre de cette variante, les pattes latérales peuvent être reliées par un arceau destiné à venir se placer au-dessus de la tête de travail lorsque le support est porté par la tête de travail.

Selon une caractéristique de l'invention, l'appareil comprend des moyens d'accrochage pour solidariser le support au tronc du châssis.

Selon une variante de cette caractéristique, les moyens d'accrochage comprennent au moins une languette destinée à venir s'engager dans une fenêtre complémentaire du tronc aménagée dans le tronc du châssis.

Selon une caractéristique de l'invention, le support comprend une ouverture d'accès orientée vers le tronc lorsque le support est adapté sur le châssis. Cette position de l'ouverture d'accès permet d'éviter la mise oeuvre d'un couvercle pour obturer l'ouverture d'accès dans la mesure où le tronc en limite l'accès et fait obstacle à une sortie du contenu du support lorsque celui-ci est monté sur le châssis.

Selon une autre caractéristique de l'invention, le support comprend un logement de rangement d'un accessoire de nettoyage.

Selon encore une autre caractéristique de l'invention, le support comprend des moyens de visualisation d'une partie au moins de l'intérieur du support. De tels moyens de visualisation permettent de vérifier le contenu du support et notamment de contrôler la présence du ou des accessoires de travail susceptibles d'équiper l'appareil selon l'invention.

Les moyens de visualisation peuvent alors être réalisés de toute manière appropriée telle que par exemple sous la forme d'au moins une fenêtre aménagée dans une paroi externe du support. Les moyens de visualisation peuvent également être formés par une partie transparente ou translucide d'une paroi externe du support. Bien entendu l'ensemble du support peut être formé dans un matériau transparent ou translucide.

Selon une caractéristique de l'invention, l'appareil comprend au moins deux accessoires de travail amovibles, le support étant adapté pour recevoir les deux accessoires de travail.

Selon une variante de cette caractéristique, les accessoires de travail sont adaptés pour être empilés les uns sur les autres dans le support. Un tel empilement permet, d'une part, d'optimiser le volume occupé par les accessoires de travail et, d'autre part, de contribuer à la stabilité de leur rangement dans le support.

Comme cela a été indiqué précédemment, l'appareil selon l'invention est susceptible de réaliser différentes opérations. Ainsi, selon un mode de réalisation de l'appareil, la tête de travail définit une zone de coupe à l'intérieur de laquelle le ou l'un des accessoires de travail peut être placé pour couper des aliments dans un mouvement de translation rectiligne alternative.

Selon un autre mode de réalisation de l'invention, la tête de travail comporte un organe d'entraînement rotatif pour entraîner le ou l'un des accessoires de travail ; la tête de travail définit alors une zone de coupe à l'intérieur de laquelle le ou l'un des accessoires de travail peut être placé pour couper des aliments dans un mouvement de rotation.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un appareil de préparation culinaire conforme à l'invention ainsi que diverses formes de réalisation d'outils interchangeables susceptibles de l'équiper.
- La figure 1 est une vue en perspective d'un appareil de préparation culinaire selon l'invention.
- La figure 2 est une vue en coupe longitudinale de l'appareil illustré sur la figure 1.
- La figure 3 est une vue en perspective et en éclaté de l'appareil de découpe illustré à la figure 1.
- La figure 4 est une vue en perspective schématique montrant des accessoires de travail amovibles susceptibles d'être utilisés avec l'appareil selon l'invention ainsi qu'un support amovible de rangement de ces derniers.
- La figure 5 est une vue en coupe longitudinale du support de rangement contenant les accessoires de travail amovibles illustrés sur la figure 4 empilés les uns sur les autres.
- La figure 6 est une vue en élévation de l'appareil illustré sur la figure 1 équipé du support de rangement illustré sur les figures 4 et 5.
- Les figures 7 et 8 sont des vues en perspective de deux accessoires de travail susceptibles d'être utilisés avec l'appareil illustré sur les figures 1 à 3,
- Les figures 9 et 10 sont des vues en coupe longitudinale des accessoires de travail illustrés sur la figure 7 d'une part et sur la figure 8 d'autre part.
- La figure 11 est une vue schématique du principe de fonctionnement de l'accessoire de travail illustré sur les figures 7 et 9.
- La figure 12 illustre une variante de réalisation de l'appareil et du support de rangement selon l'invention.
- Les figures 13 à 15 illustrent d'autres variantes de réalisation de l'appareil et du support de rangement selon l'invention.

Il est à noter que sur ces figures les éléments structurels et/ou fonctionnels communs aux différentes variantes peuvent présenter les mêmes références.

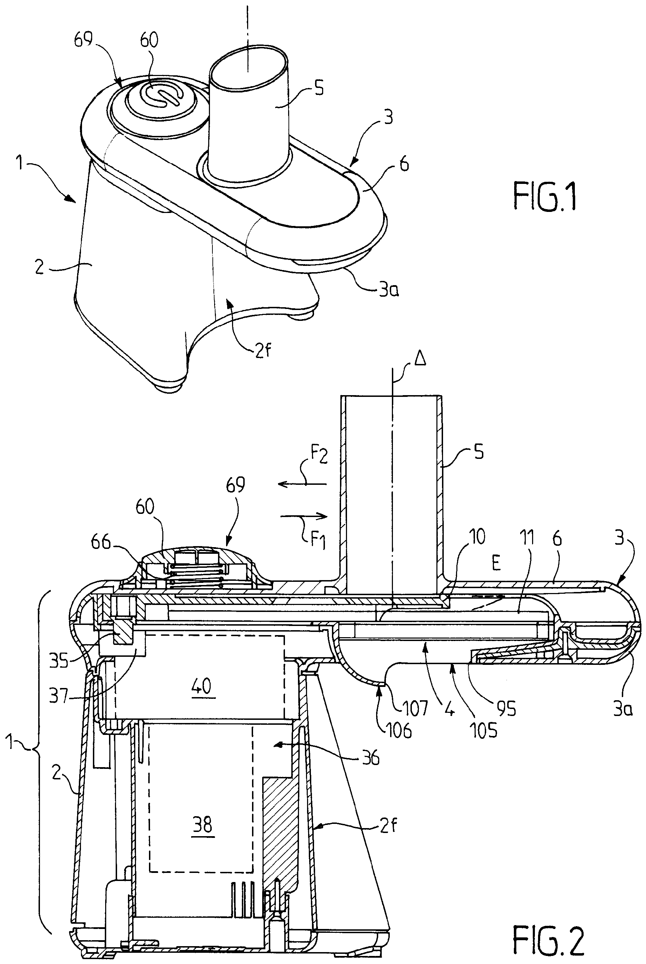

Un appareil de préparation culinaire selon l'invention, tel qu'illustré aux figures 1 à 3, comprend un châssis 1 formé, selon l'exemple illustré, d'un tronc 2 destiné à être posé sur une surface de travail et d'une tête de travail 3 s'étendant à partir du tronc 2 pour comprendre une région 3a décalée par rapport au tronc 2 et surplombant la surface de travail en étant située à distance de la surface de travail. La tête de travail s'étend ainsi en porte-à-faux à partir du tronc 2 et délimite, latéralement au tronc 2, une zone de coupe 4. De ce fait, la zone de coupe 4 se trouve située en hauteur par rapport à la surface de travail sur laquelle repose le châssis 1 de sorte qu'il est possible de placer un récipient sous la zone de coupe 4 pour recueillir les aliments découpés au moyen d'accessoires de travail situés dans ladite zone de coupe 4, comme cela apparaîtra par la suite. Selon l'exemple illustré, la face 2f du tronc orientée vers la zone de coupe 4 est concave de manière à pouvoir épouser la forme arrondie d'un bol, d'un saladier ou encore d'une assiette de sorte que ceux-ci soient correctement positionnés sous la zone de coupe 4.

L'appareil de préparation culinaire comprend également une goulotte 5 d'introduction d'aliments à découper qui est solidaire du châssis 1 et se trouve située au-dessus de la zone de coupe 4. Selon l'exemple illustré, la goulotte 5 est intégrée à un couvercle 6 amovible qui recouvre la tête de travail 3 de manière à ce que la zone de coupe 4 et les outils de coupe qui s'y trouvent ne soient pas accessibles par le dessus. La goulotte 5 s'étend selon une direction Δ sensiblement verticale. La goulotte 5 est fixe par rapport à la zone de coupe 4. La zone de coupe 4 est fixe par rapport au chassis 1.

L'appareil de préparation culinaire selon l'invention comprend au moins un accessoire de travail 131 ; 132 ; 133 ; 134 ; 135 ; 136 destiné à être adapté de manière amovible sur le châssis 1.

Plus particulièrement dans l'exemple de réalisation illustré sur les figures 1 à 4, l'accessoire de travail 131 est susceptible d'être utilisé seul pour couper des aliments en tranches ; l'accessoire de travail 132 est susceptible d'être utilisé seul pour râper finement des aliments, tandis que l'accessoire de travail 133 est susceptible d'être utilisé seul pour râper plus grossièrement des aliments.

Les accessoires de travail 131 ; 132 ; 133 forment chacun un outil de coupe 10 ; 10' ; 10" mobile en translation selon une direction D sensiblement normale à la direction Δ d'extension de la goulotte 5.

Les accessoires de travail 134 ; 135 ; 136 comprennent chacun un outil de coupe 10 mobile en translation selon une direction D sensiblement normale à la direction Δ d'extension de la goulotte 5, ainsi qu'un outil de coupe complémentaire 11 ; 11' ; 11" fixe par rapport au châssis 1 en étant situé dans la zone de coupe 4 sous la goulotte 5 de manière à ce que l'outil de coupe 10 se déplace entre la goulotte 5 et l'outil de coupe complémentaire 11 ; 11' ; 11 ".

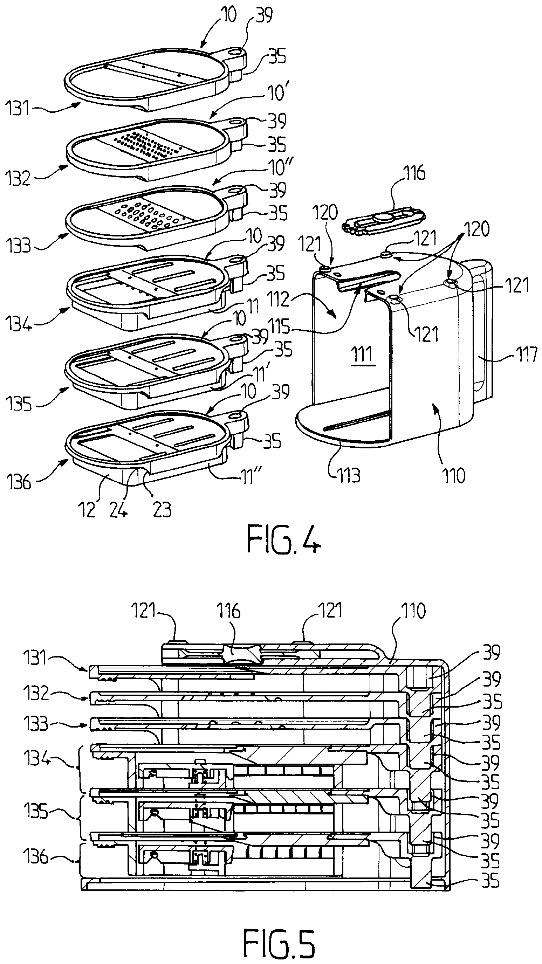

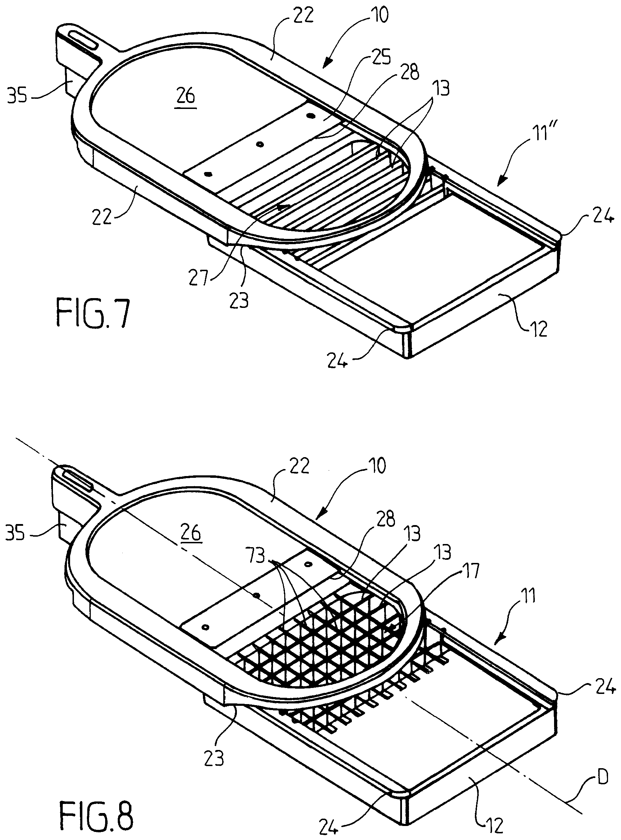

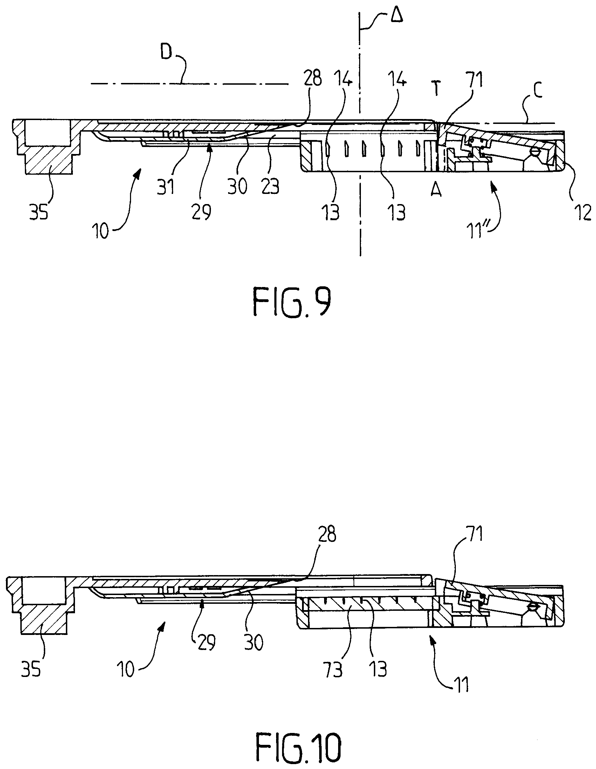

La figure 4 montre l'accessoire de travail 134 formé par l'outil de coupe complémentaire 11 fixe et l'outil de coupe 10 mobile, tels représentés aux figures 8 et 10, et destinés à être utilisés en combinaison pour découper des cubes. L'accessoire de travail 135 est également formé par un outil de coupe complémentaire 11' fixe et l'outil de coupe 10 mobile tels que décrits en relation avec les figures 8 et 10 et qui sont utilisés en combinaison pour découper des cubes de plus petite taille que ceux réalisés avec l'accessoire de travail 134. L'accessoire de travail 136 est quant à lui formé par un outil de coupe complémentaire 11" fixe et l'outil de coupe 10 mobile, tels que montrés aux figures 7 et 9, et destinés à être utilisés en combinaison pour découper des bâtonnets.

L'outil de coupe complémentaire 11" comprend, comme le montrent plus particulièrement les figures 7 et 9, un corps 12 de forme générale sensiblement parallélépipédique. Selon l'exemple illustré, le corps 12 comprend, dans sa région destinée à être placée dans la zone de coupe 4 en regard de la goulotte 5, une première série d'organes de coupe 13 parallèles entre eux. Chaque organe de coupe 13 s'étend alors dans un plan, d'une part, sensiblement parallèle à la direction Δ d'extension de la goulotte et, d'autre part, sensiblement perpendiculaire à la direction D de déplacement de l'outil de coupe 10. Les organes de coupe 13 forment ainsi un angle avec la direction de déplacement de l'outil de coupe 10 mobile. De plus, chaque organe de coupe 13 comprend une arrête de coupe 14 orientée vers le haut en direction de la goulotte 5.

L'outil de coupe 10 comprend un corps 22 pourvu de deux rainures latérales 23 destinées à venir s'engager sur deux languettes 24 longitudinales portées par le corps 12 de l'outil de coupe complémentaire 11", de sorte que l'outil de coupe 10 et l'outil de coupe complémentaire 11" sont liés l'un à l'autre par une liaison glissière assurant le guidage de l'outil de coupe 10 lors de ses mouvements alternatifs. Dans le cas présent, l'outil de coupe 10 et l'outil de coupe complémentaire 11" sont solidaires et forment un ensemble adapté de manière amovible sur le châssis 1.

Le corps 22 porte une lame 25 qui se trouve à l'avant d'une partie pleine 26 du corps 22 et à l'arrière d'une fenêtre de coupe 27 délimitée par le corps 22. La lame 25 comprend une arrête de coupe principale 28 située dans un plan de coupe C. Dans le cas présent, le plan de coupe C est sensiblement normal à la direction Δ d'extension de la goulotte 5.

L'outil de coupe 10 comprend également un sabot presseur 29 qui est issu de l'arrête de coupe principale 28 et agencé du côté de l'outil de coupe complémentaire 11". Le sabot presseur 29 comprend un biseau 30 incliné à partir de l'arrête de coupe principale 28 vers l'intérieur de l'outil de coupe 10 et dans une direction opposée au sens de travail indiqué par la flèche F1. Selon l'exemple illustré le biseau 30 se prolonge par un talon 31 sensiblement parallèle au plan de coupe C. Le sabot presseur 29 possède, selon l'exemple illustré, une épaisseur h suffisante pour occuper la majeure partie de l'espace situé entre l'outil de coupe complémentaire 11" et l'extrémité inférieure de la goulotte 5. L'épaisseur h, mesurée entre le plan de coupe et l'extrémité du biseau 30 opposée à l'arrête de coupe principale 28, est, de préférence, supérieure ou égale à 4 mm.

L'appareil de préparation culinaire comprend des moyens de manoeuvre 36 de l'outil de coupe 10 mobile. Les moyens de manoeuvre 36 sont adaptés pour assurer un déplacement de l'outil de coupe 10 selon un mouvement alternatif de translation rectiligne dans un sens de travail indiqué par la flèche F1 et dans un sens de retour indiqué par la flèche F2.

Le corps 22 de l'outil de coupe 10 comprend, au niveau d'une partie arrière, un organe d'accouplement 35 avec les moyens de manoeuvre 36. L'outil de coupe 10 se déplace alors entre :
- une position de repos R, représentée en traits pleins à la figure 2, dans laquelle l'arrête de coupe principale 28 est située en amont de la zone de coupe 4, par référence au sens de travail indiqué par la flèche F1,
- et une position d'extension E, symbolisée en traits discontinus à la figure 2, dans laquelle l'arrête de coupe principale 28 est située en aval de la zone de coupe 4, par référence au sens de travail indiqué par la flèche F1.

L'outil de coupe 10 est ainsi mobile par rapport au châssis 1 au moins dans la zone de coupe 4, selon un mouvement alternatif dans le plan de coupe C.

Selon l'exemple de réalisation de l'outil de coupe complémentaire 11" décrit en relation avec les figures 7 et 9, l'outil de coupe complémentaire 11" comprend une seule série d'organes de coupe 13. Toutefois l'outil de coupe complémentaire 11 ; 11' peut également comprendre une deuxième série d'autres organes de coupe 73 comme cela est illustré aux figures 8 et 10. Les autres organes de coupe 73 de la deuxième série sont parallèles entre eux et à la direction de déplacement D de l'outil de coupe 10. Chaque autre organe de coupe 73 s'étend en outre dans un plan sensiblement parallèle à la direction Δ d'extension de la goulotte 5. La première série d'organes de coupe 13 et la deuxième série d'autres organes de coupe 73 définissent alors une grille de découpe 17 permettant de réaliser un tranchage des aliments en cubes ou petits bâtonnets.

Par ailleurs, la tête de travail 3 définit une chambre de travail 98 qui intègre la zone de coupe 4. La tête de travail 3 présente une paroi périphérique 93 délimitant au moins en partie la chambre de travail 98. La chambre de travail 98 est ouverte vers le bas au niveau de la zone de coupe 4. La chambre de travail 98 est fermée sur le dessus par le couvercle 6. La chambre de travail 98 loge un réceptacle intermédiaire amovible 9 qui présente une forme complémentaire à la forme de la chambre de travail 98. Le réceptacle intermédiaire amovible 9 forme une glissière 99 à l'intérieur de laquelle l'outil de coupe 10 mobile peut se déplacer en translation. La glissière 99 présente deux bords latéraux 92 reliés par un plancher 91 prévu pour recouvrir en partie le fond de la chambre de travail 98. Le plancher 91 du réceptacle intermédiaire amovible 9 présente une fente 97 d'orientation longitudinale pour le passage de l'organe d'accouplement 35 de l'outil de coupe 10. En alternative, le plancher 91 du réceptacle intermédiaire amovible 9 pourrait présenter une fente 97 pour le passage de l'organe d'accouplement 35 et/ou de l'organe d'entraînement 37.

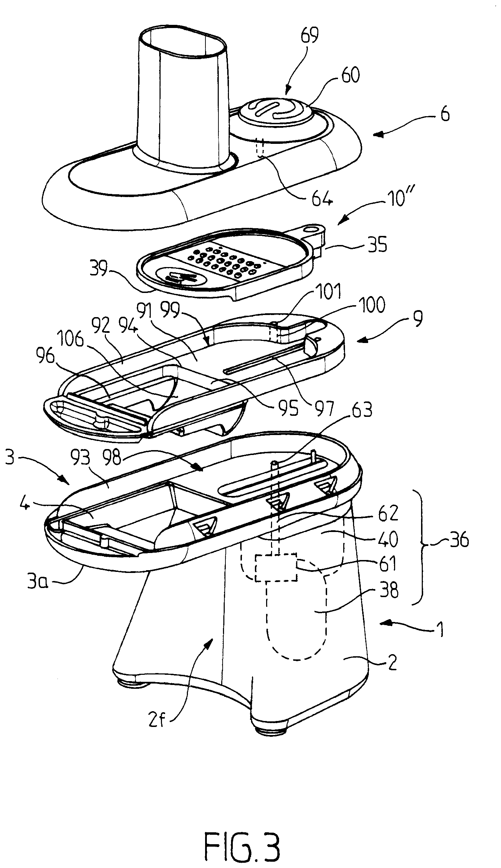

Comme le montre la figure 3 notamment, le plancher 91 présente, au niveau de la zone de coupe 4, une fenêtre 94 de chute des aliments découpés, comme cela apparaîtra par la suite. Les bords latéraux 92 de la glissière 99 se prolongent de part et d'autre de la fenêtre 94 et se rejoignent à l'une de leurs extrémités. Les bords latéraux 92 suivent la paroi périphérique 93 de la tête 3 délimitant la chambre de travail 98. La fenêtre 94 est bordée par une jupe périphérique 95 qui s'étend vers le bas en délimitant une ouverture 105 de chute des aliments découpés. La jupe périphérique 95 présente deux épaulements longitudinaux 96. L'ouverture 105 délimitée par la jupe périphérique 95 est située en dessous de la fenêtre 94.

Par ailleurs, la jupe périphérique 95 comprend, dans sa région orientée vers le tronc 2, une bavette 106 qui présente une hauteur supérieure au reste de la jupe périphérique 95.

De plus, dans le cas présent et comme le montre la figure 2, un bord 107 inférieur de la bavette 106, qui délimite une partie de l'ouverture 105, se trouve au dessus et de préférence au-delà en direction de la zone de coupe 4 de la face 2f du tronc 2 orientée vers ladite zone de coupe 4.

Le corps 12 de l'outil de coupe complémentaire 11 ; 11' ; 11" est destiné à venir s'insérer dans le logement défini par la fenêtre 94 de chute et la jupe périphérique 95 en venant en appui sur les deux épaulements longitudinaux 96 de la jupe périphérique 95.

Les accessoires de travail 131 ; 132 ; 133 ; 134 ; 135 ; 136 amovibles sont ainsi destinés à être utilisés dans l'appareil selon l'invention en fonction des besoins de l'utilisateur. Afin de permettre leur rangement l'invention propose de mettre en oeuvre un support 110 amovible tel que représenté sur les figures 4 à 6.

Le support 110 amovible de rangement des accessoires de travail 131 ; 132 ; 133 ; 134 ; 135 ; 136 est porté par le châssis 1 et est agencé principalement en dessous de la tête de travail 3 au niveau de la région 3a en surplomb décalée par rapport au tronc 2. Tel que bien visible sur la figure 2, l'ouverture 105 de chute des aliments découpés est agencée en dessous de la tête de travail 3 au niveau de la région 3a en surplomb décalée par rapport au tronc 2.

Selon l'exemple illustré, le support 110 comprend une ouverture d'accès 112. L'ouverture d'accès 112 est orientée vers le tronc 2 lorsque le support 110 est adapté sur le châssis 1. Le support 110 définit un compartiment 111 ouvert au niveau de l'ouverture d'accès 112 et fermé sur ses autres côtés. Le support 110 forme ainsi un boîtier de rangement des accessoires de travail 131 ; 132 ; 133 ; 134 ; 135 ; 136.

Les accessoires de travail 131 ; 132 ; 133 ; 134 ; 135 ; 136 sont par ailleurs adaptés pour être empilés les uns sur les autres dans le support 110, comme le montre la figure 5. L'ouverture d'accès 112 est alors adaptée pour permettre l'introduction de la pile ainsi formée dans le compartiment 111 par un mouvement de translation en glissant sur un plancher 113 du compartiment 111. Il est à noter que le compartiment 111 présente ici une forme complémentaire de celle de l'empilement de sorte que les accessoires de travail 131 ; 132 ; 133 ; 134 ; 135 ; 136 s'y trouvent calés.

Selon l'exemple illustré, le support 110 comprend en outre un logement 115 de rangement d'un accessoire de nettoyage 116 adapté au nettoyage des accessoires de travail 131 ; 132 ; 133 ; 134 ; 135 ; 136, notamment de leurs parties coupantes et/ou de leurs ouvertures de passage d'aliments découpés. Le support 110 comprend aussi des moyens de visualisation d'une partie au moins de l'intérieur du support 110. Dans le cas présent, les moyens de visualisation sont formés par une fenêtre 117 aménagée dans une paroi du support 110.

L'appareil de préparation culinaire comprend des moyens de suspension 120 pour suspendre le support 110 au moins en partie sous la tête de travail 3.

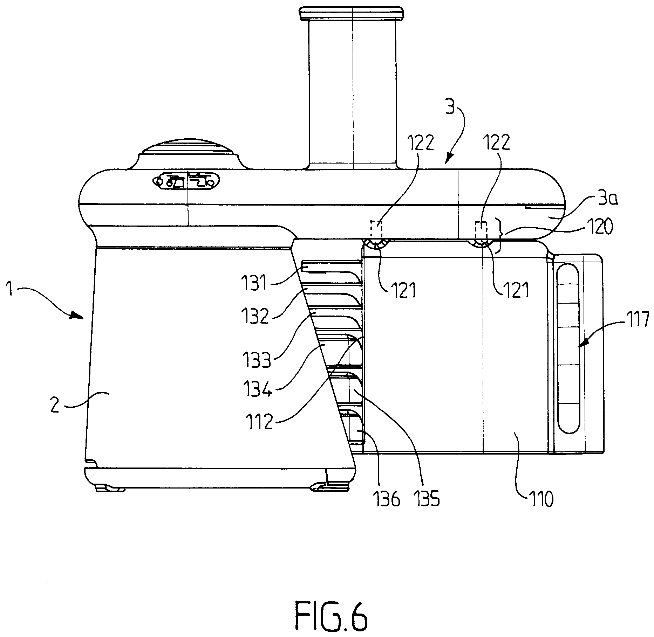

Selon l'exemple illustré et comme le montre la figure 6, les moyens de suspension 120 fonctionnent par attraction magnétique et comprennent des moyens d'attache magnétique 121 ; 122 dont une partie 121 est portée par le support 110 et une autre partie 122 est portée par la tête de travail 3. Dans le cas présent, les parties 121 sont formées par des pastilles de métal ferromagnétique tandis que les autres parties 122 sont formées par des aimants permanents. Le support 110 est ainsi fixé de manière amovible au châssis 1.

Ainsi, le support 110 est facilement placé sous la partie en surplomb de la tête de travail 3 en étant porté par cette dernière lorsque l'appareil n'est pas utilisé. Dans cette position de rangement et comme le montre la figure 6, l'ouverture d'accès 112 est alors orientée vers le tronc 2 de sorte que ce dernier l'occulte en partie et empêche que les accessoires de travail 131 ; 132 ; 133 ; 134 ; 135 ; 136 ne puissent glisser en dehors du compartiment 111.

La tête de travail 3 définit la zone de coupe 4 à l'intérieur de laquelle l'un des accessoires de travail 131 ; 132 ; 133 ; 134 ; 135 ; 136 peut être placé pour couper des aliments dans un mouvement de translation rectiligne alternative.

Selon l'exemple illustré, les moyens de manoeuvre 36 sont intégrés au chassis 1. Les moyens de manoeuvre 36 sont motorisés et comprennent un organe d'entraînement 37 complémentaire de l'organe d'accouplement 35 de l'outil de coupe 10. Dans le cas présent, l'organe d'entraînement 37 des moyens de manoeuvre 36 est formé par un ergot destiné à venir s'engager dans un alésage complémentaire de l'organe d'accouplement 35 de l'outil de coupe 10. Les moyens de manoeuvre 36 comprennent, par ailleurs, un moteur électrique 38 dont l'arbre de sortie entraîne un système de transmission 40 adapté pour assurer un déplacement rectiligne alternatif à l'organe d'entraînement 37.

L'organe d'accouplement 35 de chacun des accessoires de travail 131 ; 132 ; 133 ; 134 ; 135 ; 136 est prévu pour être entraîné par l'organe d'entraînement 37 appartenant aux moyens de manoeuvre 36. Par ailleurs, chacun des accessoires de travail présente, sur une face opposée à l'organe d'accouplement 35, une conformation de réception 39 prévue pour loger au moins partiellement l'organe d'accouplement 35 d'un autre accessoire de travail empilé sur ledit accessoire de travail.

La mise en marche et l'arrêt du moteur électrique 38 sont assurés par des moyens de commande qui comprennent un organe de commande 69 placé sur le couvercle 6. Selon l'exemple illustré l'organe de commande 69 est formé par un bouton-poussoir 60 mobile en translation sensiblement verticale entre une position relevée et une position abaissée. Les moyens de commande comprennent, d'autre part, un interrupteur 61 qui est situé dans le châssis 1, plus particulièrement dans le tronc 2. L'interrupteur 61 est actionné par l'intermédiaire d'une tige de commande 62 située sous le couvercle 6 lorsque celui-ci est en place. La tige de commande 62 est disposée dans un alésage 63 agencé en regard du couvercle 6 occupant la position verrouillée.

Plus particulièrement dans l'exemple de réalisation illustré sur la figure 3, la tige de commande 62 est montée dans le châssis 1, et l'extrémité supérieure de la tige de commande 62 affleure au niveau d'une surface supérieure du châssis 1 située sous le couvercle 6 dans la chambre de travail 98.

L'alésage 63 présente, de préférence, des dimensions suffisamment petites pour empêcher une manoeuvre de la tige de commande 62 avec le doigt d'une main d'un utilisateur adulte, voire d'un enfant. Dans le cas d'un alésage 63 cylindrique de révolution, le diamètre de ce dernier sera de préférence inférieur à 1 cm. Le diamètre de l'alésage 63 est par exemple de 6,5 mm.

La tige de commande 62 est actionnée par l'intermédiaire d'un élément de transmission 100 qui est disposé dans un autre alésage 101 du réceptacle intermédiaire amovible 9. Plus particulièrement, l'extrémité supérieure de l'élément de transmission 100 affleure au niveau d'une surface supérieure du réceptacle intermédiaire amovible 9 située sous le couvercle 6.

Afin de permettre l'actionnement de l'élément de transmission 100 et, donc, de la tige de commande 62, le bouton-poussoir 60 est solidaire d'un doigt de manoeuvre 64 qui présente un diamètre inférieur à celui de l'autre alésage 101 et qui est situé en regard de l'autre alésage 101 lorsque le couvercle 6 est en position verrouillée sur le châssis 1 et décalé par rapport à l'autre alésage 101 lorsque le couvercle 6 est en position déverrouillée. L'autre alésage 101 possède de préférence un diamètre inférieur ou égal à 1 cm. Le diamètre de l'autre alésage 101 est par exemple de 6 mm. De plus, le bouton poussoir 60 est monté mobile contre un élément de rappel élastique 66, tel que visible sur la figure 2.

Ainsi, dans la mesure où l'élément de transmission 100 affleure et compte tenu des dimensions de l'autre alésage 101, il n'est pas possible d'actionner la tige de commande 62 pour commander le fonctionnement du moteur électrique 38 sans que, d'une part, le réceptacle intermédiaire amovible 9 ne soit en place ni que, d'autre part, le couvercle 6 ne soit convenablement positionné sur la tête 3. Cette disposition limite les risques de blessures qui résulteraient d'une mise en mouvement de l'outil de coupe 10 mobile alors que le couvercle 6 et le réceptacle intermédiaire amovible 9 ne seraient pas en place.

Par ailleurs, lorsque le bouton poussoir 60 est enfoncé, le doigt de manoeuvre 64 est inséré dans l'autre alésage 101 et l'élément de transmission 100 est inséré dans l'alésage 63, de sorte que le couvercle 6 est bloqué en position verrouillée sur le châssis 1.

L'appareil de préparation culinaire selon l'invention, ainsi constitué, est mis en oeuvre de la manière suivante.

L'utilisateur retire le support 110 de la tête de travail 3 et sélectionne par exemple l'accessoire de travail 134 pour le monter dans la tête de travail 3 après avoir retiré le couvercle 6. L'accessoire de travail 134 formé par l'outil de coupe 10 et l'outil de coupe complémentaire 11 est placé dans la tête de travail 3. Ensuite, le couvercle 6 est mis en place sur la tête de travail 3, de sorte que l'outil de coupe 10, l'outil de coupe complémentaire 11 ainsi que la zone de coupe 4 ne sont pas accessibles par le dessus de l'appareil. Dans la mesure où le couvercle 6 est convenablement placé, une pression sur le bouton-poussoir 60 permet de déclencher le fonctionnement du moteur électrique 38 et donc la mise en mouvement de l'outil de coupe 10. Afin d'augmenter la sécurité de l'appareil, selon une forme préférée mais non strictement nécessaire de réalisation de l'invention, le bouton-poussoir 60 doit être maintenu enfoncé pour assurer un fonctionnement continu du moteur électrique 38, tout relâchement du bouton-poussoir 60 entraînant alors un arrêt du moteur électrique 38.

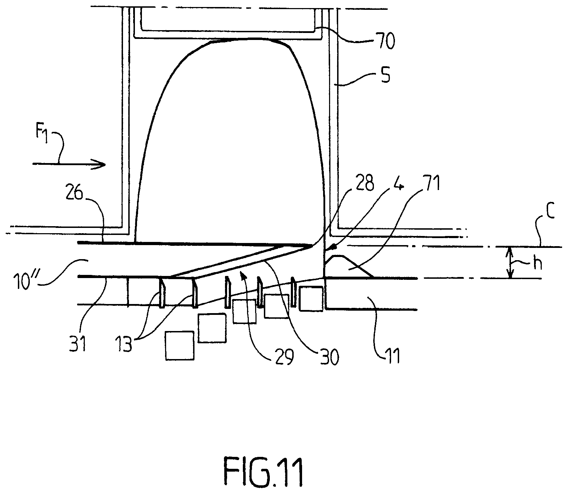

Les aliments à découper sont introduits dans la goulotte 5 pour y être poussés au moyen d'un poussoir 70. A titre d'exemple, la figure 11 montre schématiquement le fonctionnement combiné de l'outil de coupe 10 et de l'outil de coupe complémentaire 11 lors de la découpe d'une pomme de terre.

Lorsque l'extrémité inférieure de la pomme de terre arrive dans la zone de coupe 4, elle vient en appui contre les organes de coupe 13 de l'outil de coupe complémentaire 11. Lors de son déplacement dans le sens de travail indiqué par la flèche F1, l'arrête de coupe principale 28 de l'outil de coupe 10 tranche la partie de la pomme de terre se trouvant dans la zone de coupe 4 entre l'outil de coupe complémentaire 11 et le plan de coupe C. Au fur et à mesure de l'avancement de l'outil de coupe 10, le biseau 30 presse la partie découpée contre les organes de coupe 13 de l'outil de coupe complémentaire 11 de sorte que la partie découpée se trouve tranchée parallèlement à la direction Δ d'extension et donc divisée en bâtonnets qui viennent se placer entre les organes de coupe 13. Les bâtonnets ainsi découpés seront alors expulsés lors du prochain passage de l'outil de coupe 10.

Il est à noter que le talon 31 du sabot presseur 29 contribue à assurer un parfait engagement des bâtonnets entre les organes de coupe 13.

Par ailleurs, afin d'éviter que la partie découpée ne suive la translation de l'outil de coupe 10, l'outil de coupe complémentaire 11 comprend de préférence une butée 71 d'appui qui s'étend transversalement au plan de coupe C et se trouve sensiblement en regard de l'arrête de coupe principale 28. Selon l'exemple illustré la butée 71 est mobile entre une position de travail T, telle qu'illustrée en traits pleins à la figure 9, et une position de retrait A, illustrée entrée discontinue à la figure 9, dans laquelle la butée 71 est effacée en dessous du plan de coupe C. La butée 71 est alors asservie en position de travail T par des moyens de rappel élastiques 72 tel qu'un ressort hélicoïdal. Ainsi, la butée 71 peut passer de manière automatique en position de retrait A sous l'effet de la pression exercée par le biseau 30 du sabot presseur 29.

Il apparaît donc que l'appareil ainsi équipé de l'accessoire de travail 134 formé par l'outil de coupe 10 mobile et l'outil de coupe complémentaire 11 fixe permet de réaliser en un seul passage de la découpe d'un aliment en bâtonnets.

Après avoir découpé les aliments souhaités, l'utilisateur peut nettoyer l'accessoire de travail 134, si désiré avec l'accessoire de nettoyage 116, puis le replacer dans le support 110 et suspendre le support 110 sous la tête de travail 3.

Tel que bien visible sur la figure 6, le support 110 est placé sous la partie en surplomb de la tête de travail 3 en étant porté par cette dernière lorsque l'appareil n'est pas utilisé. Ainsi dans l'exemple de réalisation illustré sur les figures 1 à 11, le support 110 est alors agencé en dessous de l'ouverture 105 de chute des aliments découpés, bien visible sur les figures 2 et 3.

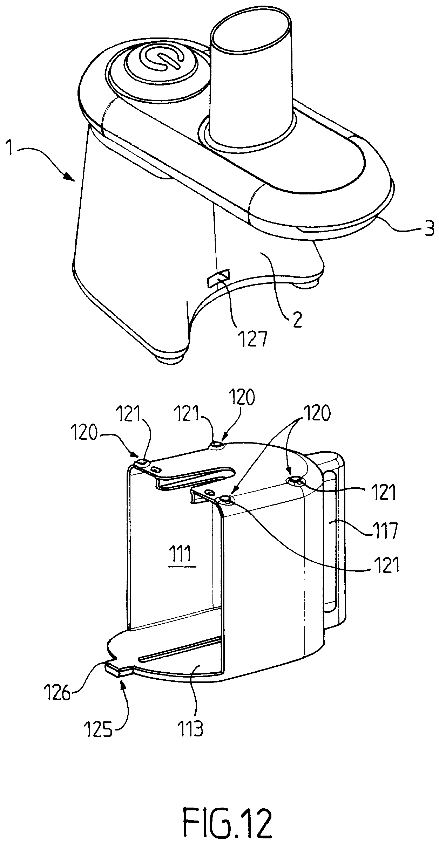

Selon la variante illustrée à la figure 12, les moyens d'attache magnétique 121 ; 122 sont complétés par des moyens d'accrochage 125 pour solidariser le support 110 au tronc 2 du chassis 1. Les moyens d'accrochage 125 comprennent, dans le cas présent, une languette 126 destinée à venir s'engager dans une fenêtre complémentaire 127 aménagée dans le tronc 2. Les moyens d'accrochage 125 permettent de soulager les efforts appliqués sur les moyens d'attache magnétique 121,122.

Selon l'invention la fixation du support 110 sur la tête de travail 3 n'est pas nécessairement réalisée par attraction magnétique mais peut aussi être assurée par appui mécanique.

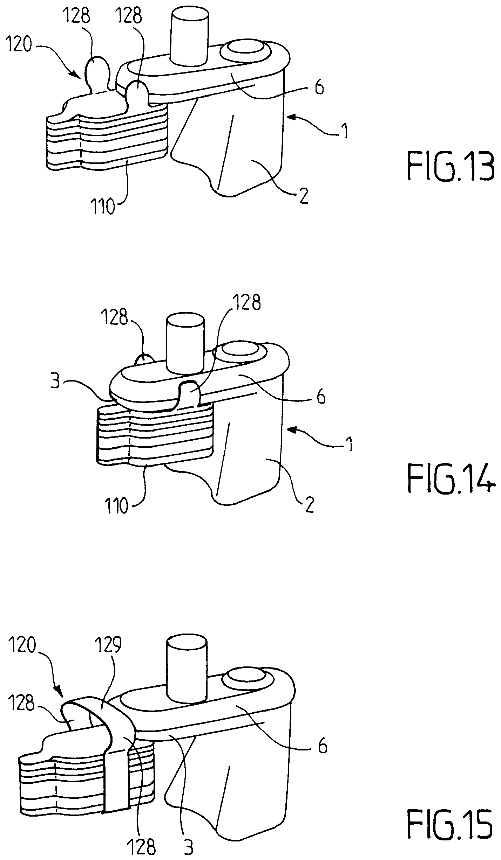

Ainsi, les figures 13 et 14 montrent une autre forme de réalisation du support 110 selon laquelle les moyens de suspension 120 sont adaptés pour maintenir le support 110 par appui mécanique. A cet effet les moyens de suspension 120 comprennent deux pattes latérales 128 adaptées pour emboiter deux côtés opposés de la tête de travail 3, comme le montre la figure 14.

Selon la variante illustrée sur la figure 15, les deux pattes latérales 128 sont reliées par un arceau 129 destiné à venir se placer au-dessus de la tête de travail 3, et plus particulièrement au dessus du couvercle 6, lorsque le support 110 est porté par la tête de travail 3.

A titre de variante, le support 110 amovible de rangement peut recevoir au moins un accessoire de travail 131 ; 132 ; 133 ; 134 ; 135 ; 136 amovible. Avantageusement alors, l'appareil de préparation culinaire comprend au moins deux accessoires de travail 131 ; 132 ; 133 ; 134 ; 135 ; 136 amovibles et le support 110 est adapté pour recevoir au moins les deux accessoires de travail 131 ; 132 ; 133 ; 134 , 135 , 136.

A titre de variante, l'appareil selon l'invention ne comporte pas nécessairement au moins un accessoire de travail 131 ; 132 ; 133 ; 134 ; 135 ; 136 pour couper des aliments dans un mouvement de translation rectiligne alternative. L'appareil selon l'invention peut notamment comporter au moins un accessoire de travail rotatif, par exemple de type disque, tambour cylindrique ou tambour tronconique, la tête de travail 3 comprenant alors un organe d'entraînement rotatif pour entraîner en rotation le ou l'un des accessoires de travail rotatifs susceptible(s) d'être rangé(s) dans le support de rangement agencé principalement en dessous de la tête de travail 3 au niveau de la région 3a en surplomb. De manière connue, la tête de travail 3 des appareils du type précité peut notamment présenter une ouverture de chute des aliments découpés agencée sur une extrémité latérale de la tête de travail, et non sous la tête de travail. Le support de rangement n'est alors pas nécessairement agencé en dessous de l'ouverture de chute des aliments découpés.

A titre de variante, le chassis 1 peut comprendre un socle s'étendant au moins partiellement en dessous de la tête de travail 3.

La présente invention n'est nullement limitée aux exemples de réalisation décrits et à leurs variantes, mais englobe de nombreuses modifications dans le cadre des revendications.

## Revendications

1. Appareil de préparation culinaire comprenant :
- un châssis (1) qui comprend, d'une part, un tronc (2) destiné à être posé sur une surface de travail et, d'autre part, une tête de travail (3) s'étendant à partir du tronc (2) pour comprendre une région (3a) décalée par rapport au tronc (2) et surplombant la surface de travail en étant située à distance de la surface de travail,
- au moins un accessoire de travail (131 ; 132 ; 133 ; 134 ; 135 ; 136) destiné à être adapté de manière amovible sur le châssis (1),
**caractérisé en ce qu'**il comprend un support (110) amovible de rangement du ou d'au moins un des accessoires de travail (131 ; 132 ; 133 ; 134 ; 135 ; 136), **en ce que** le support (110) est porté par le châssis (1) et **en ce que** le support (110) est agencé principalement en dessous de la tête de travail (3) au niveau de la région (3a).

2. Appareil de préparation culinaire selon la revendication 1, **caractérisé en ce que** le support (110) est agencé en dessous d'une ouverture (105) de chute des aliments découpés agencée en dessous de la tête de travail (3), et **en ce que** le support (110) est porté par la tête de travail (3) lorsque l'appareil n'est pas utilisé.

3. Appareil de préparation culinaire selon l'une des revendications 1 ou 2, **caractérisé en ce qu'**il comprend des moyens de suspension (120) pour suspendre le support (110) au moins en partie sous la tête de travail (3).

4. Appareil de préparation culinaire selon la revendication 3, **caractérisé en ce que** les moyens de suspension (120) comprennent des moyens d'attache magnétique (121 ; 122) dont une partie (121) est portée par la tête de travail (3) et une autre partie (122) par le support (110).

5. Appareil de préparation culinaire selon la revendication 3, **caractérisé en ce que** les moyens de suspension (120) sont adaptés pour maintenir le support (110) par appui mécanique.

6. Appareil de préparation culinaire selon la revendication 5, **caractérisé en ce que** les moyens de suspension (120) comprennent au moins deux pattes latérales (128) adaptées pour emboîter deux côtés opposés de la tête de travail (3).

7. Appareil de préparation culinaire selon la revendication 6, **caractérisé en ce que** les pattes latérales (128) sont reliées par un arceau (129) destiné à venir se placer au-dessus de la tête de travail (3) lorsque le support (110) est porté par la tête de travail (3).

8. Appareil de préparation culinaire selon l'une des revendications 1 à 7, **caractérisé en ce qu'**il comprend des moyens d'accrochage (125) pour solidariser le support (110) au tronc (2) du châssis (1).

9. Appareil de préparation culinaire selon la revendication 8, **caractérisé en ce que** les moyens d'accrochage (125) comprennent au moins une languette (126) destinée à venir s'engager dans une fenêtre complémentaire (127) aménagée dans le tronc (2) du châssis (1).

10. Appareil de préparation culinaire selon l'une des revendications 1 à 9, **caractérisé en ce que** le support (110) comprend une ouverture d'accès (112) orientée vers le tronc (2) lorsque le support (110) est adapté sur le châssis (1).

11. Appareil de préparation culinaire selon l'une des revendications 1 à 10, **caractérisé en ce que** le support (110) comprend un logement (115) de rangement d'un accessoire de nettoyage (116).

12. Appareil de préparation culinaire selon l'une des revendications 1 à 11, **caractérisé en ce que** le support (110) comprend des moyens de visualisation d'une partie au moins de l'intérieur du support (110).

13. Appareil de préparation culinaire selon l'une des revendications 1 à 12, **caractérisé en ce qu'**il comprend au moins deux accessoires de travail (131 ; 132 ; 133 ; 134 ; 135 ; 136) amovibles et **en ce que** le support (110) est adapté pour recevoir les deux accessoires de travail (131 ; 132 ; 133 ; 134 ; 135 ; 136).

14. Appareil de préparation culinaire selon la revendication 13, **caractérisé en ce que** les accessoires de travail (131 ; 132 ; 133 ; 134 ; 135 ; 136) sont adaptés pour être empilés les uns sur les autres dans le support (110).

15. Appareil de préparation culinaire selon l'une des revendications 1 à 14, **caractérisé en ce que** la tête de travail (3) définit une zone de coupe (4) à l'intérieur de laquelle le ou l'un des accessoires de travail (131 ; 132 ; 133 ; 134 ; 135 ; 136) peut être placé pour couper des aliments dans un mouvement de translation rectiligne alternative.

16. Appareil de préparation culinaire selon l'une des revendications 1 à 15, **caractérisé en ce que** la tête de travail (3) comporte un organe d'entraînement rotatif pour entraîner le ou l'un des accessoires de travail (131 ; 132 ; 133 ; 134 ; 135 ; 136).

## Patentansprüche

1. Gerät zur Zubereitung von Speisen mit:
- einem Gehäuse (1) mit einerseits einem Sockel (2) zum Abstellen auf einer Arbeitsfläche und andererseits einem Arbeitskopf (3), der sich vom Sockel (2) aus erstreckt und einen zum Sockel (2) versetzten und über die Arbeitsfläche ragenden Bereich (3a) umfasst, der von der Arbeitsfläche beabstandet ist,
- zumindest einem Arbeitszubehörteil (131; 132; 133; 134; 135; 136) zur abnehmbaren Anbringung am Gehäuse (1), **dadurch gekennzeichnet, dass** das genannte Gerät eine abnehmbare Halterung (110) zur Aufbewahrung des oder zumindest eines der Arbeitszubehörteile (131; 132; 133; 134; 135; 136) umfasst, dass die genannte Halterung (110) von dem Gehäuse (1) getragen wird, und dass die Halterung (110) hauptsächlich unter dem Arbeitskopf (3) in dem Bereich (3a) angeordnet ist.

2. Gerät zur Zubereitung von Speisen nach Anspruch 1, **dadurch gekennzeichnet, dass** sich die Halterung (110) unter einer Öffnung (105) befindet, aus der die zerkleinerten Nahrungsmittel fallen und die sich unter dem Arbeitskopf (3) befindet, und dass die Halterung (110) von dem Arbeitskopf (3) getragen wird, wenn das Gerät nicht verwendet wird.

3. Gerät zur Zubereitung von Speisen nach einem der Ansprüche 1 oder 2, **dadurch gekennzeichnet, dass** es Aufhängungsmittel (120) zum zumindest teilweisen Aufhängen der Halterung (110) unter dem Arbeitskopf (3) umfasst.

4. Gerät zur Zubereitung von Speisen nach Anspruch 3, **dadurch gekennzeichnet, dass** die Aufhängungsmittel (120) Mittel (121; 122) zur magnetischen Befestigung umfassen, deren einer Teil (121) von dem Arbeitskopf (3) und der andere Teil (122) von der Halterung (110) getragen wird.

5. Gerät zur Zubereitung von Speisen nach Anspruch 3, **dadurch gekennzeichnet, dass** die Aufhängungsmittel (120) so ausgelegt sind, dass sie die Halterung (110) durch mechanische Abstützung halten.

6. Gerät zur Zubereitung von Speisen nach Anspruch 5, **dadurch gekennzeichnet, dass** die Aufhängungsmittel (120) zumindest zwei seitliche Laschen (128) umfassen, die so ausgelegt sind, dass sie um zwei gegenüberliegende Seiten des Arbeitskopfes (3) passen.

7. Gerät zur Zubereitung von Speisen nach Anspruch 6, **dadurch gekennzeichnet, dass** die seitlichen Laschen (128) durch einen Bügel (129) verbunden sind, der über dem Arbeitskopf (3) liegt, wenn die Halterung (110) von dem Arbeitskopf (3) getragen wird.

8. Gerät zur Zubereitung von Speisen nach einem der Ansprüche 1 bis 7, **dadurch gekennzeichnet, dass** es Einrastmittel (125) umfasst, die die Halterung (110) mit dem Sockel (2) des Gehäuses (1) fest verbinden.

9. Gerät zur Zubereitung von Speisen nach Anspruch 8, **dadurch gekennzeichnet, dass** die Einrastmittel (125) zumindest eine Zunge (126) umfassen, die in eine entsprechende, in dem Sockel (2) des Gehäuses (1) vorgesehene Aussparung (127) einrastet.

10. Gerät zur Zubereitung von Speisen nach einem der Ansprüche 1 bis 9, **dadurch gekennzeichnet, dass** die Halterung (110) eine Zugangsöffnung (112) aufweist, die zum Sockel (2) weist, wenn die Halterung (110) am Gehäuse (1) angebracht ist.

11. Gerät zur Zubereitung von Speisen nach einem der Ansprüche 1 bis 10, **dadurch gekennzeichnet, dass** die Halterung (110) eine Aufnahme (115) zur Aufbewahrung eines Reinigungszubehörs (116) umfasst.

12. Gerät zur Zubereitung von Speisen nach einem der Ansprüche 1 bis 11, **dadurch gekennzeichnet, dass** die Halterung (110) Mittel zur Sichtbarmachung zumindest eines Teils des Innenraums der Halterung (110) umfasst.

13. Gerät zur Zubereitung von Speisen nach einem der Ansprüche 1 bis 12, **dadurch gekennzeichnet, dass** es zumindest zwei abnehmbare Arbeitszubehörteile (131; 132; 133; 134; 135; 136) umfasst und dass die Halterung (110) so ausgelegt ist, dass sie die beiden Arbeitszubehörteile (131; 132; 133; 134; 135; 136) aufnimmt.

14. Gerät zur Zubereitung von Speisen nach Anspruch 13, **dadurch gekennzeichnet, dass** die Arbeitszubehörteile (131; 132; 133; 134; 135; 136) so ausgelegt sind, dass sie in der Halterung (110) übereinander gestapelt werden können.

15. Gerät zur Zubereitung von Speisen nach einem der Ansprüche 1 bis 14, **dadurch gekennzeichnet, dass** der Arbeitskopf (3) eine Schneidzone (4) definiert, in die das oder eines der Arbeitszubehörteile (131; 132; 133; 134; 135; 136) platziert werden kann, um in einer geradlinigen Hin- und Herbewegung Nahrungsmittel zu zerkleinern.

16. Gerät zur Zubereitung von Speisen nach einem der Ansprüche 1 bis 15, **dadurch gekennzeichnet, dass** der Arbeitskopf (3) ein Drehantriebsorgan umfasst, das das oder eines der Arbeitszubehörteile (131; 132; 133; 134; 135; 136) antreibt.

## Claims

1. Food preparation appliance comprising:
- a frame (1) which comprises, firstly, a stem (2) intended to be placed on a work surface and, secondly, a working head (3) extending from the stem (2) to comprise a region (3a) offset with respect to the stem (2) and overhanging the work surface by being located away from the work surface,
- at least one working accessory (131; 132; 133; 134; 135; 136) intended to be removably adapted on the frame (1), **characterised in that** said appliance comprises a removable support (110) for storing the or at least one of the working accessory(ies) (131; 132; 133; 134; 135; 136), **in that** said support (110) is carried by the frame (1), and **in that** the support (110) is arranged mainly underneath the working head (3) in the region (3a).

2. Food preparation appliance according to claim 1, **characterised in that** the support (110) is arranged underneath a cut food discharge opening (105) arranged underneath the working head (3) and **in that** the support (110) is carried by the working head (3) when the appliance is not used.

3. Food preparation appliance according to claim 1 or 2, **characterised in that** it comprises suspension means (120) for suspending the support (110) at least partially under the working head (3).

4. Food preparation appliance according to claim 3, **characterised in that** the suspension means (120) comprise magnetic attachment means (121; 122) of which one portion (121) is carried by the working head (3) and another portion (122) by the support (110).

5. Food preparation appliance according to claim 3, **characterised in that** the suspension means (120) are adapted to maintain the support (110) by mechanical pressing.

6. Food preparation appliance according to claim 5, **characterised in that** the suspension means (120) comprise at least two side lugs (128) adapted to engage two opposite sides of the working head (3).

7. Food preparation appliance according to claim 6, **characterised in that** the side lugs (128) are connected by a hoop (129) intended to be positioned above the working head (3) when the support (110) is carried by the working head (3).

8. Food preparation appliance according to one of claims 1 to 7, **characterised in that** it comprises hooking means (125) for securing the support (110) to the stem (2) of the frame (1).

9. Food preparation appliance according to claim 8, **characterised in that** the hooking means (125) comprise at least one tab (126) intended to engage in a complementary window (127) formed in the stem (2) of the frame (1).

10. Food preparation appliance according to one of claims 1 to 9, **characterised in that** the support (110) comprises an access opening (112) directed towards the stem (2) when the support (110) is adapted on the frame (1).

11. Food preparation appliance according to one of claims 1 to 10, **characterised in that** the support (110) comprises a housing (115) for storing a cleaning accessory (116).

12. Food preparation appliance according to one of claims 1 to 11, **characterised in that** the support (110) comprises means for viewing at least part of the inside of the support (110).

13. Food preparation appliance according to one of claims 1 to 12, **characterised in that** it comprises at least two removable working accessories (131; 132; 133; 134; 135; 136) and **in that** the support (110) is adapted to receive the two working accessories (131; 132; 133; 134; 135; 136).

14. Food preparation appliance according to claim 13, **characterised in that** the working accessories (131; 132; 133; 134; 135; 136) are adapted to be stacked on top of each other in the support (110).

15. Food preparation appliance according to one of claims 1 to 14, **characterised in that** the working head (3) defines a cutting area (4) inside which the or one of the working accessory(ies) (131; 132; 133; 134; 135; 136) can be placed to cut food in an alternating straight translation movement.

16. Food preparation appliance according to one of claims 1 to 15, **characterised in that** the working head (3) comprises a rotary drive member for driving the or one of the working accessory(ies) (131; 132; 133; 134; 135; 136).
